# EUROPEAN PATENT SPECIFICATION

(11) **EP 3 471 477 B1**
(45) Date of publication and mention of the grant of the patent: **01.12.2021**
(21) Application number: 18803242.9
(22) Date of filing: 10.05.2018
(51) Int. Cl.: H04W 72/02, H04L 29/08, H04W 4/40, H04W 8/00, H04W 72/04, H04W 8/24

(54) **V2X SIGNAL TRANSMISSION METHOD BY TERMINAL HAVING LIMITED TRANSMISSION CAPABILITY IN MULTI-CARRIER SYSTEM AND TERMINAL USING SAID METHOD**
V2X-SIGNALÜBERTRAGUNGSVERFAHREN DURCH EIN ENDGERÄT MIT BEGRENZTER ÜBERTRAGUNGSFÄHIGKEIT IN EINEM MEHRTRÄGERSYSTEM UND ENDGERÄT MIT VERWENDUNG DES BESAGTEN VERFAHRENS
PROCÉDÉ DE TRANSMISSION DE SIGNAL V2X PAR UN TERMINAL AYANT UNE CAPACITÉ DE TRANSMISSION LIMITÉE DANS UN SYSTÈME À PORTEUSES MULTIPLES ET TERMINAL UTILISANT LEDIT PROCÉDÉ

(30) Priority: 13.05.2017 US 201762505850 P; 11.08.2017 US 201762544762 P; 10.10.2017 US 201762570115 P; 11.10.2017 US 201762571170 P; 12.10.2017 US 201762571281 P; 17.11.2017 US 201762588136 P; 15.02.2018 US 201862631493 P; 13.03.2018 KR 20180029347; 09.05.2018 KR 20180053130
(43) Date of publication of application: 17.04.2019
(73) Proprietor: LG Electronics Inc., Seoul 07336 (KR)
(72) Inventor: LEE, Seungmin, Seoul 06772 (KR); SEO, Hanbyul, Seoul 06772 (KR); CHAE, Hyukjin, Seoul 06772 (KR)
(74) Representative: Maikowski & Ninnemann Patentanwälte Partnerschaft mbB
(86) International application number: PCT/KR2018/005355
(87) International publication number: WO 2018/212504

(56) References cited:
- EP-A1- 3 478 005
- WO-A1-2017/034324
- KR-A- 20160 012 226
- KR-A- 20160 018 283
- KR-A- 20170 020 853
- INTEL CORPORATION: "Details of random resource selection by pedestrian UEs", 3GPP DRAFT; R1-1702140 INTEL - PUE RANDOM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 12 February 2017 (2017-02-12), XP051209299, Retrieved from the Internet: URL:http://www.3gpp.org/ftp/Meetings_3GPP_ SYNC/RAN1/Docs/ [retrieved on 2017-02-12]
- CATT: "On Prioritization of SL TX for V2X under eNB management", 3GPP DRAFT; R1-1608723, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051148779, Retrieved from the Internet: URL:http://www.3gpp.org/ftp/Meetings_3GPP_ SYNC/RAN1/Docs/ [retrieved on 2016-10-09]
- INTEL CORPORATION: "Sidelink Carrier Aggregation for Mode-4 LTE V2V Communication", 3GPP DRAFT; R1-1717330 - INTEL - V2X_SLCA_M4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20171009 - 20171013 30 September 2017 (2017-09-30), XP051351845, Retrieved from the Internet: URL:http://www.3gpp.org/ftp/tsg_ran/WG1_RL 1/TSGR1_90b/Docs/ [retrieved on 2017-09-30]
- Intel Corporation: "Sidelink Carrier Aggregation for LTE V2V Communication", 3GPP TSG RAN WG1 MEETING #89 R1-1707300, 7 May 2017 (2017-05-07), XP051262960, Hangzhou, P.R. China
- Intel Corporation: "Details of Random Resource Selection by Pedestrian UEs", 3GPP TSG RAN WG1 Meeting #88 R1-1702140, 7 February 2017 (2017-02-07), XP051221049, Athens, Greece
- LG ELECTRONICS: "List of agreements for "Support for V2V services based on LTE sidelink"", 3GPP DRAFT; R1-168217 SL-V2V AGREEMENTS AFTER RAN1#86, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 6 September 2016 (2016-09-06), XP051158247, Retrieved from the Internet: URL:http://www.3gpp.org/ftp/tsg_ran/WG1_RL 1/TSGR1_86/Docs/ [retrieved on 2016-09-06]

## Description

### BACKGROUND OF THE INVENTION

### Field of the invention

The present invention relates to wireless communications, and more particularly, to a method for a terminal having limited transmission capability to transmit V2X signals and a terminal using the method.

### [Background Art]

There is a growing interest in a Device-to-Device (D22) technology in which devices perform direct communication. In particular, D2D has been in the spotlight as a communication technology for a public safety network. The public safety network has higher service requirements (reliability and security) than the commercial communication network. In particular, if coverage of cellular communication is not affected or available, the public safety network also requires direct communication between devices, that is, D2D operation.

D2D operation may have various advantages in that it is communication between devices in proximity. For example, D2D UE has a high transfer rate and a low delay and may perform data communication. Furthermore, in D2D operation, traffic concentrated on a base station can be distributed. If D2D UE plays the role of a relay, it may also play the role of extending coverage of a base station.

Meanwhile, in long term evolution-advanced (LTE-A), an interface between a terminal and a terminal is referred to as sidelink, and the sidelink may also be used for a communication between terminals installed on vehicles or between a terminal installed on a vehicle and another arbitrary terminal, that is, vehicle-to-everything (V2X) communication.

The conventional V2X communication does not support the carrier aggregation. The carrier aggregation means that carriers can be used in combination, and is classified into an aggregation of contiguous carriers and an aggregation of non-contiguous carriers.

When the carrier aggregation is used in the V2X communication, a terminal may transmit V2X signals by using a plurality of carriers. However, a terminal is not always able to transmit V2X signals simultaneously in all carriers that are configured. For example, in the case that the number of transmission chains that are provided is less than the number of carriers that are configured, the terminal is not able to support the transmission of V2X signals simultaneously in all of the configured carriers. Methods for transmitting and receiving V2X signals are exemplarily described in WO 2017/034324 A1 and INTEL CORPORATION: "Sidelink Carrier Aggregation for Mode-4 LTE V2V Communication", 3GPP DRAFT; R1-1717330- INTEL- V2X_SLCA_M4, 3RD GENERATION PARTNERSHIP PROJECT (3GPP), MOBILE COMPETENCE CENTRE.

In the case that the carrier aggregation is used for the V2X communication with respect to the terminal that has such a limited transmission capability, it becomes a problem the way of selecting a transport resource by the terminal.

### SUMMARY OF THE INVENTION

An object of the present invention is to provide a method for transmitting a V2X signal by a terminal that has a limited transmission capability in a multi-carrier system and a terminal using the method.

The invention is defined by the subject-matter of the independent claims. Particular embodiments of the invention are set out in the dependent claims.

According to the present invention, when the carrier aggregation is used in a V2X communication, a transmission resource is selected efficiently on a plurality of carriers by considering a transmission capability of a terminal.

### BRIEF DESCRIPTION OF THE DRAWINGS

FIG. 1 shows a wireless communication system.
FIG. 2 is a diagram showing a wireless protocol architecture for a user plane.
FIG. 3 is a diagram showing a wireless protocol architecture for a control plane.
FIG. 4 illustrates scenarios for a V2X communication.
FIG. 8 illustrates an example (option 1-1) of resource selection for each carrier in the case that the carrier aggregation is used in V2X transmission.
FIG. 9 illustrates a resource selection method performed by a UE according to option 1-1 described above.
FIG. 10 illustrates another example (option 1-2) of a resource selection for each carrier in the case that the carrier aggregation is used in V2X communication.
FIG. 11 illustrates another example (option 2) of a resource selection for each carrier in the case that the carrier aggregation is used in V2X communication.
FIG. 13 is a block diagram of an apparatus in which the embodiment of the present invention is implemented.

### DESCRIPTION OF EXEMPLARY EMBODIMENTS

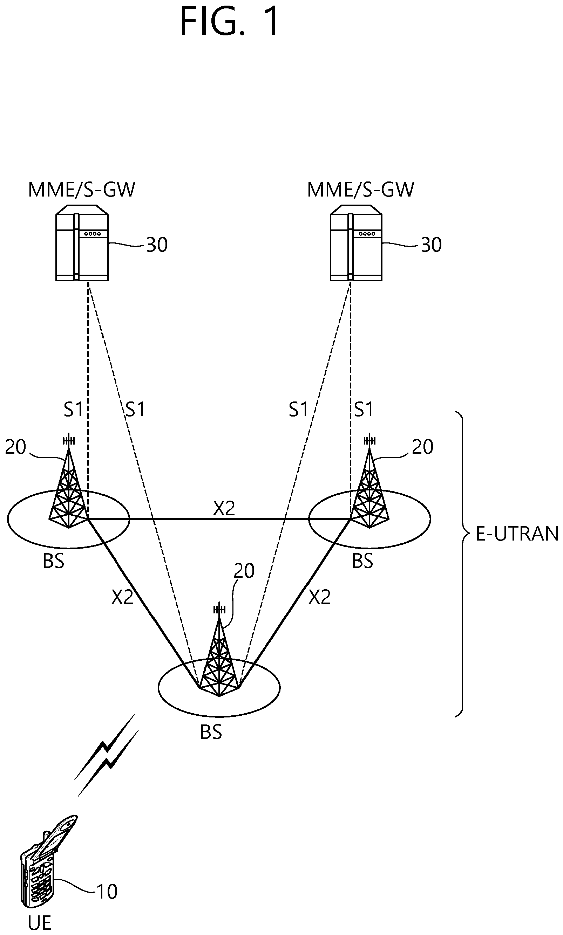

FIG. 1 shows a wireless communication system.

The wireless communication system may be referred to as an Evolved-UMTS Terrestrial Radio Access Network (E-UTRAN) or a Long Term Evolution (LTE)/LTE-A system, for example.

The E-UTRAN includes at least one base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, etc. The BS 20 is generally a fixed station that communicates with the UE 10 and may be referred to as another terminology, such as an evolved node-B (eNB), a base transceiver system (BTS), an access point, etc.

The BSs 20 are interconnected by means of an X2 interface. The BSs 20 are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A wireless communication system may be a time division duplex (TDD) system, a frequency division duplex (FDD) system or a system in which the TDD and the FDD are used in mixed manner.

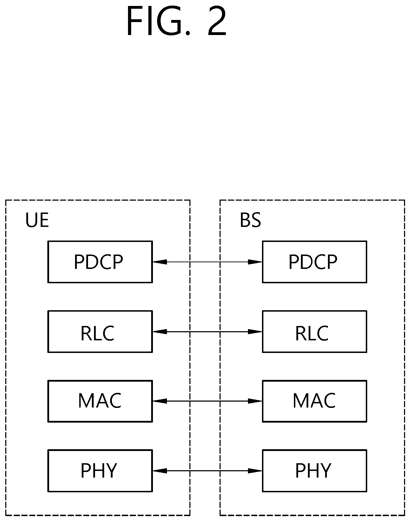

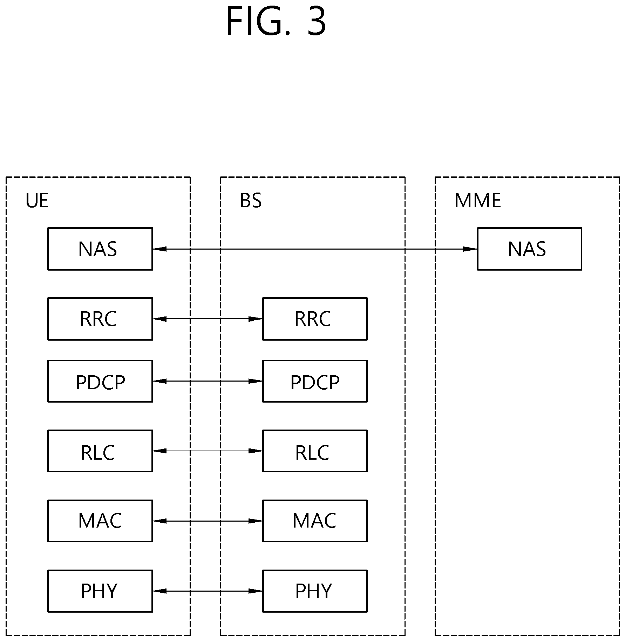

FIG. 2 is a diagram showing a wireless protocol architecture for a user plane. FIG. 3 is a diagram showing a wireless protocol architecture for a control plane. The user plane is a protocol stack for user data transmission. The control plane is a protocol stack for control signal transmission.

Referring to FIGs. 2 and 3, a PHY layer provides an upper layer with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

The RRC state means whether or not the RRC layer of UE is logically connected to the RRC layer of the E-UTRAN. A case where the RRC layer of UE is logically connected to the RRC layer of the E-UTRAN is referred to as an RRC connected state. A case where the RRC layer of UE is not logically connected to the RRC layer of the E-UTRAN is referred to as an RRC idle state. The E-UTRAN may check the existence of corresponding UE in the RRC connected state in each cell because the UE has RRC connection, so the UE may be effectively controlled. In contrast, the E-UTRAN is unable to check UE in the RRC idle state, and a Core Network (CN) manages UE in the RRC idle state in each tracking area, that is, the unit of an area greater than a cell. That is, the existence or non-existence of UE in the RRC idle state is checked only for each large area. Accordingly, the UE needs to shift to the RRC connected state in order to be provided with common mobile communication service, such as voice or data.

When a user first powers UE, the UE first searches for a proper cell and remains in the RRC idle state in the corresponding cell. The UE in the RRC idle state establishes RRC connection with an E-UTRAN through an RRC connection procedure when it is necessary to set up the RRC connection, and shifts to the RRC connected state. A case where UE in the RRC idle state needs to set up RRC connection includes several cases. For example, the cases may include a need to send uplink data for a reason, such as a call attempt by a user, and to send a response message as a response to a paging message received from an E-UTRAN.

A Non-Access Stratum (NAS) layer placed over the RRC layer performs functions, such as session management and mobility management.

In the NAS layer, in order to manage the mobility of UE, two types of states: EPS Mobility Management-REGISTERED (EMM-REGISTERED) and EMM-DEREGISTERED are defined. The two states are applied to UE and the MME. UE is initially in the EMM-DEREGISTERED state. In order to access a network, the UE performs a process of registering it with the corresponding network through an initial attach procedure. If the attach procedure is successfully performed, the UE and the MME become the EMM-REGISTERED state.

In order to manage signaling connection between UE and the EPC, two types of states: an EPS Connection Management (ECM)-IDLE state and an ECM-CONNECTED state are defined. The two states are applied to UE and the MME. When the UE in the ECM-IDLE state establishes RRC connection with the E-UTRAN, the UE becomes the ECM-CONNECTED state. The MME in the ECM-IDLE state becomes the ECM-CONNECTED state when it establishes S1 connection with the E-UTRAN. When the UE is in the ECM-IDLE state, the E-UTRAN does not have information about the context of the UE. Accordingly, the UE in the ECM-IDLE state performs procedures related to UE-based mobility, such as cell selection or cell reselection, without a need to receive a command from a network. In contrast, when the UE is in the ECM-CONNECTED state, the mobility of the UE is managed in response to a command from a network. If the location of the UE in the ECM-IDLE state is different from a location known to the network, the UE informs the network of its corresponding location through a tracking area update procedure.

Now, the D2D operation will now be described. In 3GPP LTE-A, the service related to D2D operation is called proximity based service (ProSe). Hereinafter, ProSe is equivalent to D2D operation and ProSe may be interchanged with D2D operation. ProSe will now be described.

The ProSe includes ProSe direction communication and ProSe direct discovery. The ProSe direct communication is communication performed between two or more proximate UEs. The UEs may perform communication by using a protocol of a user plane. A ProSe-enabled UE implies a UE supporting a procedure related to a requirement of the ProSe. Unless otherwise specified, the ProSe-enabled UE includes both of a public safety UE and a non-public safety UE. The public safety UE is a UE supporting both of a function specified for a public safety and a ProSe procedure, and the non-public safety UE is a UE supporting the ProSe procedure and not supporting the function specified for the public safety.

ProSe direct discovery is a process for discovering another ProSe-enabled UE adjacent to ProSe-enabled UE. In this case, only the capabilities of the two types of ProSe-enabled UE are used. EPC-level ProSe discovery means a process for determining, by an EPC, whether the two types of ProSe-enabled UE are in proximity and notifying the two types of ProSe-enabled UE of the proximity.

Hereinafter, for convenience, the ProSe direct communication may be referred to as D2D communication, and the ProSe direct discovery may be referred to as D2D discovery. The link used for a D2D operation is referred to as sidelink in LTE.

Now, a vehicle to everything (V2X) communication is described. The V2X means a communication between a UE installed on a vehicle and another UE, and another UE may correspond to a pedestrian, a vehicle or an infrastructure. In this case, these may be referred to as a vehicle to pedestrian (V2P), a vehicle to vehicle (V2V) and a vehicle to infrastructure (V2I), respectively.

The V2X communication transmits/receives data/control information through sidelink defined in a D2D operation, not through uplink/downlink between an eNB and a UE, which is used in the conventional LTE communication.

The following physical channels may be defined in sidelink as below.

Physical Sidelink Broadcast CHannel (PSBCH) is a physical sideleink broadcast channel. Physical Sidelink Control CHannel (PSCCH) is a physical sidelink control channel. Physical Sidelink Discovery CHannel is a physical sidelink discovery channel. Physical Sidelink Shared CHannel is a physical sidelink shared channel. Sidelink Synchronization Signal (SLSS) is a sidelink synchronization signal. The SLSS may include Primary Sidelink Synchronization Signal (PSSS) and Secondary Sidelink Synchronization Signal (SSSS). The SLSS and the PSBCH may be transmitted together.

The sidelink may mean an interface between a UE and a UE, and the sidelink may correspond to PC5 interface.

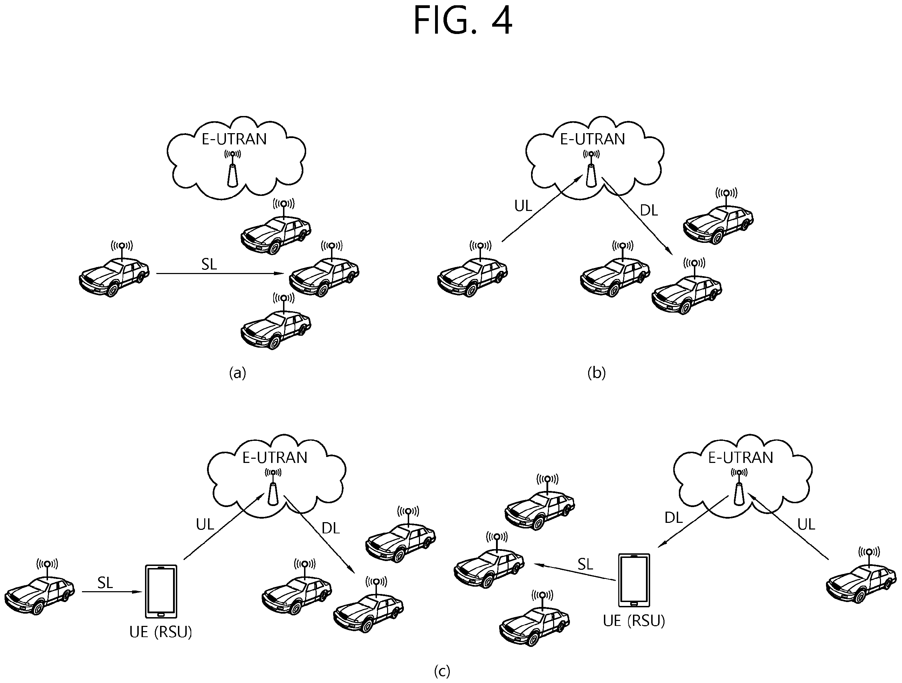

FIG. 4 illustrates scenarios for a V2X communication.

Referring to FIG. 4(a), a V2X communication may support an information exchange operation (between UEs) based on PC5, which is an interface between UEs, and as shown in FIG. 4(b), may also support an information exchange operation (between UEs) based on Uu, which is an interface between an eNodeB and a UE. In addition, as shown in FIG. 4(c), an information exchange operation (between UEs) maybe supported by using both of the PC5 and the Uu.

Hereinafter, for the convenience of description, the present invention is described based on a 3GPP LTE/LTE-A system. However, the scope of the system to which the present invention is applied is extendable to other system in addition to the 3GPP LTE/LTE-A system.

Now, the present invention is described.

The technical proposals below propose a method for a UE that has no capability of performing a simultaneous transmission and/or reception (or a UE that has a limitation in a capability of a simultaneous transmission and/or reception, and hereinafter, such a UE is referred to as 'LCAP UE') to perform a V2X communication efficiently on a plurality of (V2X) carriers which are configured (/signaled) in the Carrier Aggregation (CA) technique.

(A part of) The technical proposals of the present invention may be limitedly applied under a situation of "contiguous or non-contiguous CA in Intra-Band".

V2X communication modes include (A) a mode (this is referred to as mode #3) in which an eNB signals (/controls) scheduling information in relation to V2X message transmission (/reception) (on V2X resource pool which is preconfigured (/signaled) (from an eNB (/network)) (representatively). In mode 3, for example, a UE located in eNB communication coverage (and/or in RRC_CONNECTED state) is a main target. And/or the V2X communication modes include (B) a mode (this is referred to as mode #4) in which a UE independently determines (/controls) scheduling information in relation to V2X message transmission (/reception) (on V2X resource pool which is preconfigured (/signaled)(from an eNB (/network)). In mode 3, for example, a UE located in/out of eNB communication coverage (and/or in RRC_CONNECTED/RRC_IDEL states) may be a main target.

In the present invention, "sensing operation" may be interpreted as PSSCH-RSRP measurement operation based on PSSCH DM-RS sequence which is scheduled by a PSCCH in which decoding is successful and/or S-RSSI measurement operation based on a sub channel in relation to V2X resource pool.

In the present invention, "reception" may be extendedly interpreted as at least one of:
(A) V2X channel (/signal) (e.g., PSCCH, PSSCH, PSBCH, PSSS/SSSS, etc.) decoding (/reception) operation (and/or WAN DL channel (/signal) (e.g., PDCCH, PDSCH, PSS/SSS, etc.) decoding (/reception) operation,
(B) Sensing operation, and
(C) CBR measurement operation.

In the present invention, "transmission" may be extendedly interpreted as V2X channel (/signal) (e.g., PSCCH, PSSCH, PSBCH, PSSS/SSSS, etc.) transmission operation (and/or WAN UL channel (/signal) (e.g., PUSCH, PUCCH, SRS, etc.) transmission operation).

In the present invention, "carrier" may be extendedly interpreted as at least one of (A) carrier set (/group) which is configured (/signaled) in advance, (B) V2X resource pool (set (/group)), and (C) time/frequency resource set/group on a carrier.

(A part of) the technical proposals of the present invention may be extendedly applied to a V2X communication of a UE (e.g., a UE having simultaneous transmission and/or reception capability on a plurality of (V2X) carriers that are preconfigured (/signaled) by the CA, of which capability is relatively better than an LCAP_UE).

In the present invention, "synchronization signal" may be extendedly interpreted as it includes "PSBCH" as well as "SLSS". In the present invention, "LCAP UE" may be extendedly interpreted as at least one of a UE having "limited transmission (chain) capability" and a UE having "limited reception (chain) capability".

Sidelink Received Signal Strength Indicator (S-RSSI), Sidelink Reference Signal Received Power (S-RSRP), Channel busy ratio (CBR) and Channel occupancy ratio (CR) will be described.

First, the S-RSSI is an indicator of reception signal strength in sidelink. The S-RSSI may be defined as a linear average of total reception power for each SC-FDMA symbol in SC-FDMA symbols #1, 2, ..., 6 of the first slot and SC-FDMA symbols #0, 1, ..., 5 of a subframe, that a UE observes in a sub channel which is configured.

The S-RSRP means a reception power of a reference signal in sidelink. In the S-RSRP, for example, there is PSSCH-RSRP in which RSRP is calculated in a PSSCH. The PSSCH-RSRP may be defined as a linear average of power contributions of resource elements (REs) that carry a demodulation reference signal (DM-RS) associated with a PSSCH in physical resource blocks (PRBs) that are indicated by an associated PSCCH.

The CBR indicates a busy ratio of a channel, and the CBR measured in subframe n may be defined as below.

The PSSCH is sensed in subframe [n-100, n-1], and indicates a ratio in a resource pool of a sub channel that has an S-RSSI which is measured as exceeding a predefined or preconfigured threshold.

The PSCCH is sensed in subframe [n-100, n-1], and indicates a ratio of resources of a PSCCH pool that has an S-RSSI which is measured as exceeding a predefined or preconfigured threshold in a pool configured such that a PSCCH is transmitted together with the corresponding PSSCH in non-contiguous resource blocks. Here, it is assumed that the PSCCH pool includes resources of a size of two consecutive PRB pairs in a frequency domain.

The CR means a channel occupation rate. The CR calculated in subframe n may be defined as a value total summation of the number of sub channels used for a transmission of itself in subframe [n-a, n-1] and the number of sub channels allowed for a transmission of itself in subframe [n, n+b] divided by the number of sub channels configured in a transmission pool throughout subframe [n-a, n+b].

Here, 'a' is a positive integer and b is 0 or a positive integer. 'a' and 'b' are determined by a UE. 'a' and 'b' are in a relation of a+b+1=1000 and a is 500 or more, and n+b should not exceed the latest transmission opportunity of a grant for a current transmission.

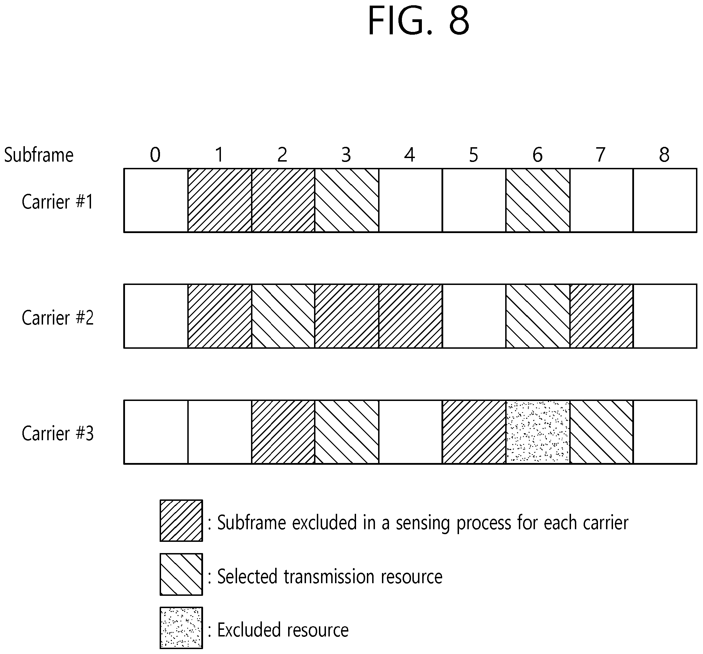

FIG. 8 illustrates an example (option 1-), which is not part of the present invention, of resource selection for each carrier in the case that the carrier aggregation is used in V2X transmission.

Referring to FIG. 8, it is assumed that carriers #1, 2 and 3 are configured to a UE by the carrier aggregation for V2X communication and the UE is a UE provided with only two transmission chains. That is, it is assumed that the UE has a capability of transmitting V2X signal only to two carriers simultaneously.

In this case, the UE may exclude a part of resources (e.g., subframes) from a candidate resource selection for V2X communication in sensing procedure of each carrier. For example, the UE may exclude the resource of which PSSCH-RSRP measurement value is greater than a preconfigured threshold value or of which S-RSSI measurement value is relatively high simultaneously while the resource is a resource reserved by other UE. FIG. 8 exemplifies the case that the resource (e.g., subframe) is excluded during the sensing process that subframes 1 and 2 are excluded in carrier #1, subframes 1, 3, 4 and 7 are excluded in carrier #2, and subframes 2 and 5 are excluded in carrier #3 during the sensing process.

The UE may select a resource for V2X communication for each carrier according to a predefined carrier order or configured carrier order (e.g., the UE may receive V2X configuration information, and the V2X configuration information may indicate to select a transmission resource in the order of the first carrier and the second carrier). In this case, the carrier resource selection order may be defined by considering ProSe priority per packet (PPPP), CBR, and so on. For example, it is assumed that the UE selects resource for V2X communication in the order of carriers #1, 2 and 3.

First, it is assumed that the UE selects subframes 3 and 6 (e.g., random selection) among subframes that are not subframe excluded in the sensing process, in carrier #1. Next, the UE selects a resource for V2X communication among subframes that are not subframe excluded in the sensing process, in carrier #2, and in this case, the UE considers the selected resource for V2X communication of the carrier that completes the resource selection previously, that is, carrier #1. For example, since the transmission capability of the UE is not exceeded (i.e., transmittable in two carriers simultaneously) even in the case that the UE selects subframe 6 in carrier #2, the UE selects subframe 6 of carrier #2. Similarly, the UE may also select subframe 2 of carrier #2.

Next, the UE selects a resource for V2X communication among subframes that are not subframe excluded in the sensing process, in carrier #3, and the UE considers the selected resources for V2X communication of the carriers that complete the resource selection previously, that is, carrier #1 and carrier #2. For example, since the transmission capability of the UE is exceeded (i.e., transmittable in two carriers simultaneously) in the case that the UE selects subframe 6 of carrier #3, the UE selects a resource for V2X communication among the remaining subframes except subframe 6 of carrier #3. Since the transmission capability of the UE is not exceeded (i.e., transmittable in two carriers simultaneously) even in the case that the UE selects subframe 3 in carrier #3, the UE selects subframe 3 of carrier #3. Similarly, the UE may also select subframe 7 of carrier #3.

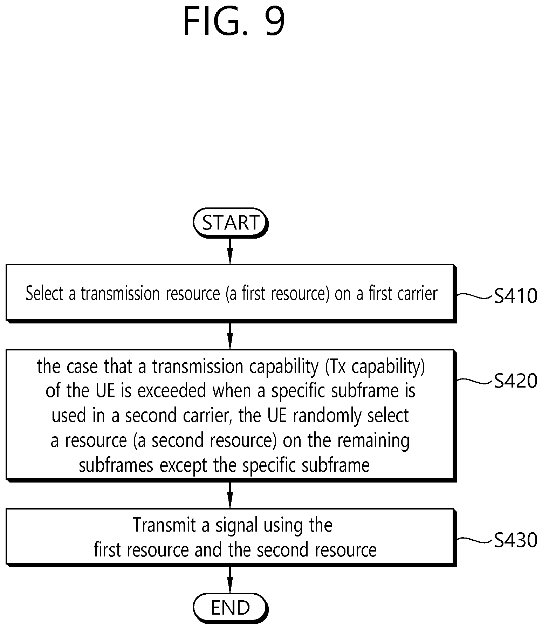

FIG. 9 illustrates a resource selection method performed by a UE according to option 1-1 described above.

Referring to FIG. 9, a UE selects a transmission resource (a first resource) on a first carrier (step, S410). In the case that a transmission capability (Tx capability) of the UE is exceeded when a specific subframe is used in a second carrier by considering the first resource, the UE randomly select a resource (a second resource) on the remaining subframes except the specific subframe (step, S420).

For example, in the specific subframe, the number of transmission chains in the UE may be less than the number of configured transmission carriers. Alternatively, the specific subframe may correspond to a transmission chain switching time of the UE.

The UE transmits a signal using the first resource and the second resource (step, S430). The signal is a V2X signal. The UE may apply option 1-1 described above to the case a) the number of transmission chains is less than the number of configured transmission carriers, or b) the subframe corresponds to a transmission chain switching time.

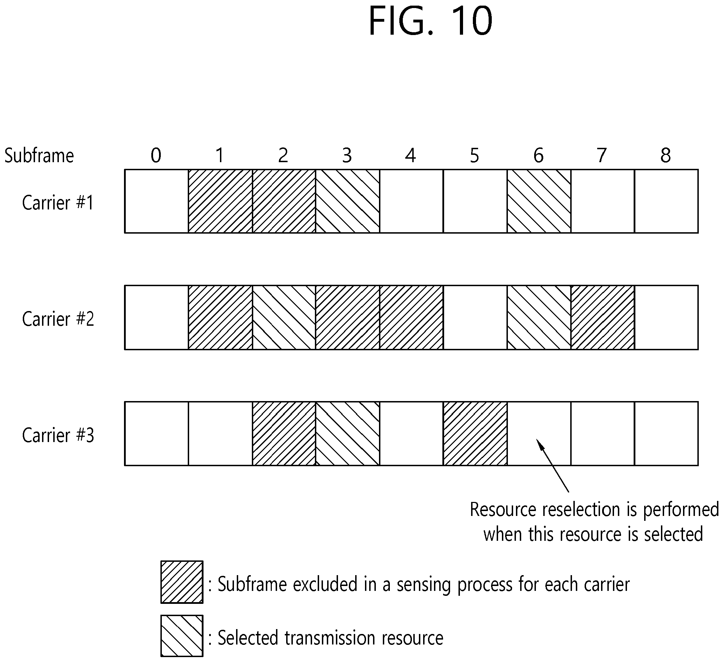

FIG. 10 illustrates another example (option 1-2), which is not part of the present invention, of a resource selection for each carrier in the case that the carrier aggregation is used in V2X communication.

Referring to FIG. 10, it is assumed that carriers #1, 2 and 3 are configured to a UE by the carrier aggregation for V2X communication and the UE is a UE provided with only two transmission chains. That is, it is assumed that the UE has a capability of transmitting V2X signal only to two carriers simultaneously.

The UE may select a resource for V2X communication for each carrier according to a predefined carrier order or configured carrier order. In this case, the carrier resource selection order may be defined by considering ProSe priority per packet (PPPP), CBR, and so on. As a result, for example, it is assumed that the UE independently selects resource for V2X communication in the order of carriers #1, 2 and 3.

First, the UE may select subframes 3 and 6 (e.g., random selection) among subframes that are not subframe excluded in the sensing process, on carrier #1. Next, the UE may randomly select a resource for V2X communication among subframes that are not subframe excluded in the sensing process, in carrier #2. At this time, in the case that the resource randomly selected with respect to carrier #2 exceeds the transmission capability of the UE itself (considering a selected resource for V2X communication of the carrier that completes the resource selection previously), the UE may repeat the random resource selection with respect to carrier #2 until the resource that does not exceed the transmission capability is selected. As a result, for example, subframes 2 and 6 may be selected on carrier #2.

Next, the UE may select (e.g., randomly select) a resource for V2X communication with respect to carrier #3. At this time, it is assumed that the UE selects subframes 3 and 6 on carrier #3 (in random way). In this case, the selected resource does not exceed the transmission capability (i.e., transmittable in two carriers simultaneously) of the UE in subframe 3, but exceeds the transmission capability (i.e., transmittable in two carriers simultaneously) of the UE in subframe 6. In this case, the UE may (randomly) reselect a resource on carrier #3 until a subframe that does not exceed the transmission capability of the UE is selected. That is, the UE repeats the resource reselection on carrier #3 until the transmission resource that the UE is supportable is selected.

According to option 1-1, when a UE selects a transmission resource on a specific carrier, in the case that the UE selects a specific subframe in the specific carrier and the subframe exceeds the transmission capability limit of the UE considering the resource reserved(selected) on other carrier, the UE (randomly) selects among the remaining subframes except the specific subframe. According to option 1-2, when a UE selects a transmission resource on a specific carrier, in the case that the UE selects a (random) resource (e.g., subframe) preferentially and the result of the corresponding resource selection exceeds the transmission capability limit of the UE considering the resource reserved(selected) on other carrier, the UE repeats a transmission resource reselection (e.g., randomly) with respect to the corresponding specific carrier until the transmission resource that the UE may support is selected.

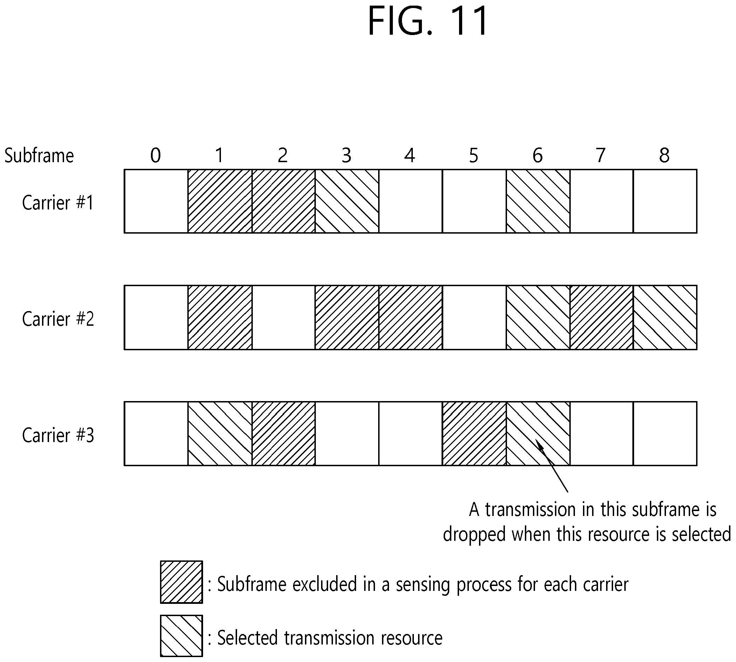

FIG. 11 illustrates another example (option 2), which is not part of the present invention, of a resource selection for each carrier in the case that the carrier aggregation is used in V2X communication.

Referring to FIG. 11, it is assumed that carriers #1, 2 and 3 are configured to a UE by the carrier aggregation for V2X communication and the UE is a UE provided with only two transmission chains. That is, it is assumed that the UE has a capability of transmitting V2X signal only to two carriers simultaneously. The UE may select a resource for V2X communication for each carrier according to a predefined carrier order or configured carrier order. In this case, the carrier resource selection order may be defined by considering ProSe priority per packet (PPPP), CBR, and so on.

For example, it is assumed that the UE selects resource for V2X communication in the order of carriers #1, 2 and 3. At this time, the UE may perform a resource selection for V2X communication independently for each carrier on each of carrier #1, 2 and 3. As a result, for example, it is assumed that the UE selects subframes 3 and 6 on carrier #1, and selects subframes 6 and 8 on carrier #2 and selects subframes 1 and 6 on carrier #3. In this case, although subframe 6 is selected on all of carriers #1, 2 and 3, the UE cannot perform a transmission for three carriers simultaneously in subframe 6 of carriers #1, 2 and 3. That is, in subframe 6, it exceeds the transmission capability (i.e., transmittable in two carriers simultaneously) of the UE. In this case, in option 2, all of the transmissions in subframe 6 may be dropped, or only a transmission of relatively low priority which is predefined (e.g., transmission of low PPPP or transmission of high CBR on a carrier) may be dropped so as not to exceed the transmission capability of the UE.

Meanwhile, the 'limited transmission capability of a UE' may mean the case that a UE is unable to support (simultaneous) transmission with respect to multiple carriers in a specific subframe owing to the following reasons (a) to (d), particularly.
(a) The case that the number of transmission chain (Tx chain) of the UE is smaller than the number of transmission carriers configured in the subframe,
(b) The case that the UE does not support a given band combination or carrier combination in the subframe,
(c) The case that the subframe corresponds to a transmission chain switching time,
(d) The case that the UE is unable to satisfy RF requirement owing to the reason such as power spectrum density (PSD) imbalance in the subframe.

Option 1-1 described in FIG. 8 may be applied to cases (a), (b) and (c). With respect to case (d), in the case that it exceeds the transmission capability when using a certain subframe, the UE may drop the transmission in the corresponding subframe.

Alternatively, option 1-1 is applied to cases (a), (b) and (c), and with respect to case (d), the UE may repeat a resource reselection in a candidate resource set until a transmission resource that satisfies the transmission capability is selected.

Alternatively, option 1-2 may be applied to cases (a), (b) and (c), and option 2 may be applied to case (d).

Alternatively, option 1-1 may be applied to cases (a), (b), (c) and (d).

Alternatively, option 1-2 may be applied to cases (a), (b), (c) and (d).

Alternatively, option 2 may be applied to cases (a), (b), (c) and (d).

Alternatively, option 1-1 may be applied to cases (a), (b) and (c), and option 1-2 may be applied to other cases.

(Example #2) In example #2, a resource selection order among carriers may be (A) defined by a carrier priority described above which is preconfigured (/signaled) and/or (B) defined by the highest (/lowest) PPPP value of a V2X message transmitted on a carrier and (C) defined in a descending (/or ascending) order based on a CBR (/CR) measurement.

(Example #3) When example #3, which is not part of the invention, is applied, considering a transmission chain switching time occurrence problem owing to a limited transmission capability (and/or half duplex problem (in relation to intra band CA)), in the case that the number of carrier(s) resources overlapped for each TTI in which selection is completed does not satisfy a predefined condition, the resource on the corresponding TTI (in which the resource selection is already completed) may be selected preferentially until satisfying the predefined condition (e.g., in a direction that carrier(s) resource(s) is selected on the same TTI to the maximum), and/or the K number of TTIs in front of and/or behind carrier(s) resource(s) in which selection is completed may be excluded from the resource selection for carrier (such an excluded resource may be used for a transmission chain switching time).

(Example #4) When example #4, which is not part of the invention, is applied, in the case that there is no remaining TTI that satisfies a predefined condition when a resource in relation to a specific carrier is selected, (A) a V2X message transmission on the corresponding carrier may be omitted, or (B) in the case that a V2X message transmission of a value of lower than (or the same as) the PPPP in relation to a V2X message on the corresponding carrier is performed on other carrier (or a V2X message transmission is performed on the carrier of low (or the same) value in comparison with the priority of the corresponding carrier, or a PPPP value in relation to a V2X message transmission on the corresponding carrier is higher than a preconfigured (/signaled) threshold value, or a priority of the corresponding carrier is higher than a preconfigured (/signaled) threshold value, etc.), a selection of the resource overlapped with a selected/reserved resource on other carrier on a time axis may be allowed (e.g., in order to prevent a V2X message transmission of PPPP value which is relatively high value (or a V2X message transmission on a carrier having relatively high priority) being omitted. In the case that latter (B) condition is not satisfied and it is unable to perform it, a V2X message transmission on the corresponding carrier may be omitted.

In addition, the proposed methods of the present invention may be extendedly applied when a UE having a transmission (chain) capability which is smaller than the number of transmission carriers (configured by a higher layer) (re)selects a resource for each carrier as well as a UE of limited capability.

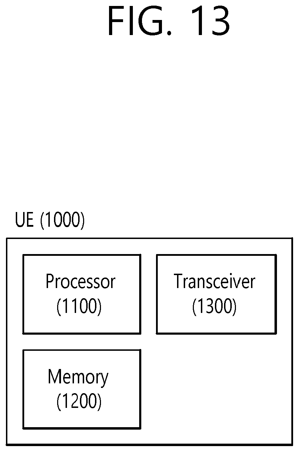

FIG. 13 is a block diagram of an apparatus in which the embodiment of the present invention is implemented.

Referring to FIG. 13, an apparatus 1000 includes a processor 1100, a memory 1200 and a transceiver 1300. The processor implements a proposed function, process and/or method. The apparatus 1000 is a UE. The transceiver 1300 is connected with the processor 1100 and transmits/receives a radio signal. The memory 1200 may store information required for an operation of the processor 1100, and may also store a transmission/reception signal.

## Claims

1. A method for transmitting a vehicle-to-everything, V2X, signal performed by a user equipment, UE, having a limited transmission capability in a multi-carrier system, the method comprising:
determining an ordering of a first carrier and a second carrier;
selecting (S410) a first resource in the first carrier;
based on a use of a specific subframe in the second carrier exceeding a transmission capability of the UE considering the first resource, selecting (S420) a second resource randomly among remaining subframes except the specific subframe in the second carrier; and
transmitting (S430) the V2X signal using the first resource and the second resource,
wherein the selection (S410) of the first resource in the first carrier being prior to the selection (S420) of the second resource in the second carrier is based on the ordering, and
wherein the ordering of the first carrier and the second carrier is determined based on a highest ProSe priority per packet, PPPP, value of PPPP values of V2X messages transmitted on the first carrier and the second carrier and a channel busy ratio, CBR, measurement.

2. The method of claim 1, wherein a number of transmission chains for the UE is smaller than a number of configured transmission carriers in the specific subframe.

3. The method of claim 1, wherein the specific subframe corresponds to a transmission chain switching time of the UE.

4. The method of claim 1, further comprising:
receiving V2X configuration information,
wherein the step of determining an ordering of a first carrier and a second carrier is additionally based on the received V2X configuration information.

5. The method of claim 1, wherein the first carrier and the second carrier are configured to the UE by carrier aggregation.

6. A user equipment, UE, comprising:
a transceiver (1300) configured to transmit and receive a radio signal; and
a processor (1100) operated in connection with the transceiver (1300),
wherein the processor (1100) is configured to perform:
determining an ordering of a first carrier and a second carrier;
selecting (S410) a first resource in the first carrier;
based on a use of a specific subframe in the second carrier exceeding a transmission capability of the UE considering the first resource, selecting (S420) a second resource randomly among remaining subframes except the specific subframe in the second carrier; and
transmitting (S430) the V2X signal using the first resource and the second resource,
wherein the selection (S410) of the first resource in the first carrier prior to the selection (S420) of the second resource in the second carrier is based on the ordering, and
wherein the ordering of the first carrier and the second carrier is determined based on a highest ProSe priority per packet, PPPP, value of PPPP values of V2X messages transmitted on the first carrier and the second carrier and a channel busy ratio, CBR, measurement.

7. The UE of claim 6, wherein a number of transmission chains for the UE is smaller than a number of configured transmission carriers in the specific subframe.

8. The UE of claim 6, wherein the specific subframe corresponds to a transmission chain switching time of the UE.

9. The UE of claim 6, wherein the processor (1100) is further configured to receive V2X configuration information, and to determine an ordering of a first carrier and a second carrier additionally based on the received V2X configuration information.

10. The UE of claim 6, wherein the processor (1100) is further configured to be configured with the first carrier and the second carrier by carrier aggregation.

## Patentansprüche

1. Verfahren zum Übertragen eines Vehicle-to-Everything- bzw. V2X-Signals, durchgeführt durch ein Benutzergerät, UE, mit begrenzter Übertragungsfähigkeit in einem Mehrträgersystem, wobei das Verfahren Folgendes umfasst:
Bestimmen einer Ordnung eines ersten Trägers und eines zweiten Trägers;
Auswählen (S410) einer ersten Ressource in dem ersten Träger;
basierend darauf, dass eine Verwendung eines spezifischen Unterrahmens in dem zweiten Träger eine Übertragungsfähigkeit des UE bezüglich der ersten Ressource übersteigt, zufälliges Auswählen (S420) einer zweiten Ressource unter verbleibenden Unterrahmen außer dem spezifischen Unterrahmen in dem zweiten Träger; und
Übertragen (S430) des V2X-Signals unter Verwendung der ersten Ressource und der zweiten Ressource,
wobei die Auswahl (S410) der ersten Ressource in dem ersten Träger vor der Auswahl (S420) der zweiten Ressource in dem zweiten Träger auf der Ordnung basiert und
wobei die Ordnung des ersten Trägers und des zweiten Trägers basierend auf einem höchsten ProSe-Priority-Per-Packet- bzw. PPPP-Wert von PPPP-Werten von auf dem ersten Träger und dem zweiten Träger übertragenen V2X-Nachrichten und einer Channel-Busy-Ratio- bzw. CBR-Messung bestimmt wird.

2. Verfahren nach Anspruch 1, wobei eine Anzahl von übertragungsketten für das UE kleiner als eine Anzahl konfigurierter Übertragungsträger in dem spezifischen Unterrahmen ist.

3. Verfahren nach Anspruch 1, wobei der spezifische Unterrahmen einer Übertragungskettenwechselzeit des UE entspricht.

4. Verfahren nach Anspruch 1, das ferner Folgendes umfasst:
Empfangen von V2X-Konfigurationsinformationen,
wobei der Schritt des Bestimmens einer Ordnung eines ersten Trägers und eines zweiten Trägers zusätzlich auf den empfangenen V2X-Konfigurationsinformationen basiert.

5. Verfahren nach Anspruch 1, wobei der erste Träger und der zweite Träger durch Trägeraggregation auf das UE konfiguriert werden.

6. Benutzergerät, UE, das Folgendes umfasst:
einen Sendeempfänger (1300), ausgelegt zum Übertragen und Empfangen eines Funksignals; und
einen Prozessor (1100), der in Verbindung mit dem Sendeempfänger (1300) betrieben wird, wobei der Prozessor (1100) dazu ausgelegt ist, Folgendes durchzuführen:
Bestimmen einer Ordnung eines ersten Trägers und eines zweiten Trägers;
Auswählen (S410) einer ersten Ressource in dem ersten Träger;
basierend darauf, dass eine Verwendung eines spezifischen Unterrahmens in dem zweiten Träger eine Übertragungsfähigkeit des UE bezüglich der ersten Ressource übersteigt, zufälliges Auswählen (S420) einer zweiten Ressource unter verbleibenden Unterrahmen außer dem spezifischen Unterrahmen in dem zweiten Träger; und Übertragen (S430) des V2X-Signals unter Verwendung der ersten Ressource und der zweiten Ressource,
wobei die Auswahl (S410) der ersten Ressource in dem ersten Träger vor der Auswahl (S420) der zweiten Ressource in dem zweiten Träger auf der Ordnung basiert und
wobei die Ordnung des ersten Trägers und des zweiten Trägers basierend auf einem höchsten ProSe-Priority-Per-Packet- bzw. PPPP-Wert von PPPP-Werten von auf dem ersten Träger und dem zweiten Träger übertragenen V2X-Nachrichten und einer Channel-Busy-Ratio- bzw. CBR-Messung bestimmt wird.

7. UE nach Anspruch 6, wobei eine Anzahl von übertragungsketten für das UE kleiner als eine Anzahl konfigurierter Übertragungsträger in dem spezifischen Unterrahmen ist.

8. UE nach Anspruch 6, wobei der spezifische Unterrahmen einer Übertragungskettenwechselzeit des UE entspricht.

9. UE nach Anspruch 6, wobei der Prozessor (1100) ferner ausgelegt ist zum Empfangen von V2X-Konfigurationsinformationen und zum Bestimmen einer Ordnung eines ersten Trägers und eines zweiten Trägers zusätzlich basierend auf den empfangenen V2X-Konfigurationsinformationen.

10. UE nach Anspruch 6, wobei der Prozessor (1100) ferner dazu ausgelegt ist, durch Trägeraggregation mit dem ersten Träger und dem zweiten Träger konfiguriert zu werden.

## Revendications

1. Procédé de transmission d'un signal de véhicule à tout, V2X, exécuté par un équipement utilisateur, UE, ayant une capacité de transmission limitée dans un système à porteuses multiples, le procédé comprenant les étapes suivantes :
déterminer un ordonnancement d'une première porteuse et d'une seconde porteuse ;
sélectionner (S410) une première ressource sur la première porteuse ;
sur la base d'une utilisation d'une sous-trame spécifique sur la seconde porteuse dépassant une capacité de transmission de l'UE considérant la première ressource, sélectionner (S420) une seconde ressource de manière aléatoire parmi les sous-trames restantes à l'exception de la sous-trame spécifique sur la seconde porteuse ; et
transmettre (S430) le signal V2X en utilisant la première ressource et la seconde ressource,
où la sélection (S410) de la première ressource sur la première porteuse antérieure à la sélection (S420) de la seconde ressource sur la seconde porteuse est basée sur l'ordonnancement, et
où l'ordonnancement de la première porteuse et de la seconde porteuse est déterminé sur la base d'une valeur de priorité ProSe par paquet, PPPP, la plus élevée des valeurs PPPP des messages V2X transmis sur la première porteuse et la seconde porteuse et d'une mesure du taux d'occupation du canal, CBR.

2. Procédé selon la revendication 1, dans lequel un nombre de chaînes de transmission pour l'UE est inférieur à un nombre de porteuses de transmission configurées dans la sous-trame spécifique.

3. Procédé selon la revendication 1, dans lequel la sous-trame spécifique correspond à un temps de commutation de chaîne de transmission de l'UE.

4. Procédé selon la revendication 1, comprenant en outre l'étape suivante :
recevoir des informations de configuration V2X,
où l'étape comprenant de déterminer un ordonnancement d'une première porteuse et d'une seconde porteuse est en outre basée sur les informations de configuration V2X reçues.

5. Procédé selon la revendication 1, dans lequel la première porteuse et la seconde porteuse sont configurées vers l'UE par agrégation de porteuses.

6. Équipement utilisateur, UE, comprenant :
un émetteur-récepteur (1300) configuré pour émettre et recevoir un signal radio ; et
un processeur (1100) fonctionnant en connexion avec l'émetteur-récepteur (1300), où le processeur (1100) est configuré pour exécuter les étapes suivantes :
déterminer un ordonnancement d'une première porteuse et d'une seconde porteuse ;
sélectionner (S410) une première ressource sur la première porteuse ;
sur la base d'une utilisation d'une sous-trame spécifique sur la seconde porteuse dépassant une capacité de transmission de l'UE considérant la première ressource, sélectionner (S420) une seconde ressource de manière aléatoire parmi les sous-trames restantes à l'exception de la sous-trame spécifique sur la seconde porteuse ; et
transmettre (S430) le signal V2X en utilisant la première ressource et la seconde ressource,
où la sélection (S410) de la première ressource sur la première porteuse antérieure à la sélection (S420) de la seconde ressource sur la seconde porteuse est basée sur l'ordonnancement, et
où l'ordonnancement de la première porteuse et de la seconde porteuse est déterminé sur la base d'une valeur de priorité ProSe par paquet, PPPP, la plus élevée des valeurs PPPP des messages V2X transmis sur la première porteuse et la seconde porteuse et d'une mesure du taux d'occupation du canal, CBR.

7. UE selon la revendication 6, dans lequel un nombre de chaînes de transmission pour l'UE est inférieur à un nombre de porteuses de transmission configurées dans la sous-trame spécifique.

8. UE selon la revendication 6, dans lequel la sous-trame spécifique correspond à un temps de commutation de chaîne de transmission de l'UE.

9. UE selon la revendication 6, dans lequel le processeur (1100) est en outre configuré pour recevoir des informations de configuration V2X,
et pour déterminer un ordonnancement d'une première porteuse et d'une seconde porteuse en outre basé sur les informations de configuration V2X reçues.

10. UE selon la revendication 6, dans lequel le processeur (1100) est en outre configuré pour être configuré avec la première porteuse et la seconde porteuse par agrégation de porteuses.
